# EUROPÄISCHE PATENTSCHRIFT

(11) **EP 2 653 024 B1**
(45) Veröffentlichungstag und Bekanntmachung des Hinweises auf die Patenterteilung: **10.06.2015**
(21) Anmeldenummer: 13001920.1
(22) Anmeldetag: 12.04.2013
(51) Int. Cl.: A01D 34/90, A01D 34/78, A01D 34/416

(54) **Arbeitsgerät**
Work device
Appareil de travail

(30) Priorität: 16.04.2012 DE 102012007405
(43) Veröffentlichungstag der Anmeldung: 23.10.2013
(73) Patentinhaber: Andreas Stihl AG & Co. KG, 71336 Waiblingen (DE)
(72) Erfinder: Krätzig, David, 71636 Ludwigsburg (DE)
(74) Vertreter: Reinhardt, Annette

(56) Entgegenhaltungen:
- EP-A1- 1 637 288
- DE-B- 1 041 660
- DE-U1- 20 316 737
- DE-U1- 29 724 791
- JP-A- H0 662 637
- SU-A1- 857 558
- US-A- 3 221 481

## Beschreibung

Die Erfindung betrifft ein Arbeitsgerät der im Oberbegriff des Anspruchs 1 angegebenen Gattung.

Elektromotorisch angetriebene Arbeitsgeräte wie beispielsweise Freischneider, Rasenmäher oder dgl. sind allgemein bekannt. Üblicherweise wird das Werkzeug über ein Getriebe von dem Antriebsmotor angetrieben. Zur Kühlung des Antriebsmotors ist ein Lüfterrad vorgesehen, das einen Kühlluftstrom durch das Motorgehäuse des Arbeitsgeräts führt. Ein derartiges Arbeitsgerät, nämlich ein Freischneider, ist aus der JP 06-062637 A bekannt. Ein weiteres Elektrohandwerkzeug ist z.B. aus EP 1 637 288 A1 bekannt.

Es ist bekannt, das Getriebe gegenüber dem Antriebsmotor zu kapseln und im Getriebegehäuse eine Fettfiillung vorzusehen, die über die Lebensdauer des Getriebes eine ausreichende Fettschmierung gewährleisten soll. Die Kapselung des Getriebes sollte flüssigkeitsdicht ausgeführt werden, um einen Verlust an Schmierstoff zu verhindern. Dadurch ergibt sich ein aufwendiger Aufbau des Getriebes.

Um auf eine Fettschmierung verzichten zu können, ist auch bekannt, Kunststoffzahnräder mit Zusätzen wie beispielsweise Teflon herzustellen, die eine gute Schmierung bewirken. Derartige Zahnräder sind jedoch vergleichsweise teuer.

Der Erfindung liegt die Aufgabe zugrunde, ein Arbeitsgerät der gattungsgemäßen Art zu schaffen, das einen einfachen Aufbau und eine hohe Lebensdauer besitzt.

Diese Aufgabe wird durch ein Arbeitsgerät mit den Merkmalen des Anspruchs 1 gelöst.

Es hat sich gezeigt, dass anstatt der bekannten Fettschmierung des Getriebes eine Trockenschmierung ausreichend ist, wenn der Graphit- bzw. Kohleabrieb der Bürsten des Kommutators als Schmiermittel genutzt wird. Die Bürsten eines Kommutators bestehen in der Regel im Wesentlichen aus Graphit, dem weitere Bestandteile in geringeren Anteilen beigemischt sein können. Anstatt das Getriebe gegenüber dem Antriebsmotor zu kapseln und abzuschirmen, ist vorgesehen, den Kühlluftstrom gezielt am Kommutator vorbei und anschließend am Getriebe vorbei zu fördern, um so den Kohleabrieb des Kommutators gezielt zum Getriebe zu fördern und das Getriebe mit dem Kohleabrieb zu schmieren. Es hat sich überraschend gezeigt, dass diese Schmierung für das Getriebe ausreichend ist und die Lebensdauer des Getriebes gegenüber einem ungeschmierten Getriebe merklich erhöht.

Um eine ausreichende Schmierung des Getriebes unmittelbar nach der Herstellung zu gewährleisten, kann es zweckmäßig sein, eine Startschmierung des Getriebes auszuführen, z. B. eine Initialfiillung des Getriebes mit einer vorgegebenen Fettmenge vorzusehen. Da eine Schmierung des Getriebes über den Kohleabrieb bzw. Graphitabrieb der Bürsten erst nach einer bestimmten Betriebsdauer gewährleistet ist, überbrückt die in das Getriebe eingebrachte Fettfüllung den Betriebszeitraum zwischen der ersten Inbetriebnahme eines neuen Arbeitsgerätes und der notwendigen Betriebsdauer, nach der allein durch den Kohleabrieb bzw. Graphitabrieb der Bürsten eine Schmierung sichergestellt ist. Dabei gewährleistet das im Getriebe befindliche Fett eine Bindung des Kohleabriebs bzw. Graphitabriebs, wodurch der Rückhalt des Kohleabriebs bzw. Graphitabriebs im Getriebe verbessert ist. Die initiale Fettfiillung gewährleistet somit nicht nur eine Erstschmierung des Getriebes, sondern bindet den im Luftstrom mitgeführten Kohleabrieb bzw. Graphitabrieb, so dass auch auf Dauer eine verbesserte Schmierung erzielt ist.

Dadurch, dass das Motorgehäuse an der dem Getriebegehäuse zugewandten Stirnseite zum Getriebegehäuse geschlossen ausgebildet ist, kann gleichzeitig verhindert werden, dass Verschmutzungen aus dem Bereich des Werkzeugs und des Getriebes zurück zum Antriebsmotor gelangen können. Das Motorgehäuse mit dem Antriebsmotor ist dadurch auch vor Flüssigkeitseintritt geschützt. Insbesondere ist das Motorgehäuse gegenüber dem Getriebegehäuse an der dem Getriebegehäuse zugewandten Stirnseite dichtend verschlossen, so dass der Antriebsmotor selbst dann vor Flüssigkeitseintritt geschützt ist, wenn das Arbeitsgerät mit seinem Getriebe in Flüssigkeit, beispielsweise Wasser, eingetaucht wird.

Vorteilhaft strömt der Kühlluftstrom im Betrieb zuerst an der Spule und anschließend am Kommutator vorbei. Dadurch wird vermieden, dass Kohleabrieb durch den Luftstrom zur Spule und zu einem Rotor des Antriebsmotors transportiert werden kann. Der Luftstrom strömt dabei vorteilhaft von der Spule zum Kommutator in einer ersten Strömungsrichtung und in der Strömungsverbindung in einer zweiten, der ersten Strömungsrichtung entgegen gerichteten Strömungsrichtung. Durch die einander entgegen gerichteten Strömungsrichtungen im Motorgehäuse und in der Strömungsverbindung wird eine effektive Kühlung des Antriebsmotors erreicht. Sowohl aus dem Motorgehäuse als auch aus der Strömungsverbindung kann über die Kühlluft effektiv Wärme abgeführt werden. Durch die Umlenkung der Kühlluft wird außerdem das Eindringen von Verschmutzungen aus dem Getriebegehäuse in das Motorgehäuse weiter erschwert.

Die Übertrittsöffnung ist vorteilhaft möglichst weit entfernt von der dem Getriebegehäuse zugewandten Stirnseite des Motorgehäuses angeordnet. Der Antriebsmotor besitzt eine erste gedachte Ebene, die an der dem Getriebegehäuse zugewandten Seite des Kommutators senkrecht zur Drehachse des Antriebsmotors verläuft. Die Übertrittsöffnung ist vorteilhaft auf der dem Getriebegehäuse abgewandten Seite der ersten gedachten Ebene angeordnet. Die Kühlluft strömt demnach bezogen auf die übliche Arbeitshaltung des Arbeitsgeräts oberhalb der dem Getriebegehäuse zugewandten Seite des Kommutators in die Strömungsverbindung ein. Der Antriebsmotor besitzt vorteilhaft eine zweite gedachte Ebene, die an der dem Getriebegehäuse abgewandten Seite des Kommutators senkrecht zur Drehachse des Antriebsmotors verläuft. Die Übertrittsöffnung ist insbesondere auf der dem Getriebegehäuse abgewandten Seite der zweiten gedachten Ebene, also oberhalb der dem Getriebegehäuse abgewandten Seite des Kommutators, angeordnet. Dadurch wird vorteilhaft sichergestellt, dass die Kühlluft vollständig durch den Bereich des Kommutators strömt und Kohleabrieb gut vom Kühlluftstrom aufgenommen und zum Getriebe abtransportiert wird.

Die Strömungsverbindung des Motorgehäuses mit dem Getriebegehäuse ist vorteilhaft ein Verbindungskanal. Die mittlere Länge des Verbindungskanals beträgt vorteilhaft mindestens etwa 5 cm, insbesondere mindestens etwa 10 cm. Der Verbindungskanal ist demnach nicht lediglich als Öffnung ausgebildet sondern besitzt eine vergleichsweise große Länge. Dadurch kann ein Übertritt von Verschmutzungen aus dem Getriebegehäuse ins Motorgehäuse wirkungsvoll verhindert werden. Die Länge des Verbindungskanals beträgt vorteilhaft weniger als etwa 25 cm. Dadurch wird sichergestellt, dass der Strömungswiderstand aufgrund der großen Kanallänge nicht übermäßig groß wird. Als besonders vorteilhaft hat sich eine mittlere Länge des Verbindungskanals von etwa 12 cm herausgestellt.

Vorteilhaft ist das Getriebe an der dem Kommutator abgewandten Seite der Spule angeordnet. Dadurch ergibt sich eine vorteilhafte Anordnung des Antriebsmotors und eine vorteilhafte Strömungsrichtung des Luftstroms am Antriebsmotor und in der Strömungsverbindung zum Getriebegehäuse.

Besonders vorteilhaft besitzt das Getriebe mindestens zwei miteinander in Eingriff stehende Zahnräder, deren Zähne aus Kunststoff bestehen. Bei Zahnrädern aus Kunststoff ist die Schmierung durch den Kohleabrieb der Bürsten des Kommutators besonders vorteilhaft. Die Zahnräder bestehen vorteilhaft vollständig aus Kunststoff, um ein geringes Gewicht des Arbeitsgeräts zu erreichen. Es kann jedoch auch vorgesehen sein, dass die Zahnräder einen Grundkörper aus Metall oder einem anderen Material besitzen und nur die Zähne aus Kunststoff bestehen. Eine vorteilhafte Anordnung ergibt sich, wenn Lüfterrad und Getriebe an gegenüberliegenden Seiten des Antriebsmotors angeordnet sind.

Das Lüfterrad ist vorteilhaft benachbart zu der Übertrittsöffnung angeordnet. Dadurch kann auf einfache Weise eine gezielte Luftführung erreicht werden. Gleichzeitig ergibt sich eine vorteilhafte Anordnung des Lüfterrads. Das Lüfterrad ist dabei insbesondere mindestens teilweise in dem Verbindungskanal angeordnet. Vorteilhaft ist das Lüfterrad stromab der Übertrittsöffnung, insbesondere vollständig in dem Verbindungskanal angeordnet.

Vorteilhaft besitzt das Arbeitsgerät ein Gehäuse, das aus mindestens zwei Schalen gebildet ist, wobei das Motorgehäuse, das Getriebegehäuse und die Strömungsverbindung durch die beiden Schalen gebildet sind. Das Gehäuse ist dabei insbesondere ein Kunststoffspritzgussteil. Dadurch ergibt sich ein einfacher Aufbau. Für die Ausbildung von Getriebegehäuse, Motorgehäuse und Strömungsverbindung werden im Wesentlichen nur zwei Schalen benötigt.

Vorteilhaft tritt der Kühlluftstrom durch mindestens eine Einlassöffnung in das Motorgehäuse ein und verlässt das Getriebegehäuse durch mindestens eine Auslassöffnung, wobei die Auslassöffnung zwischen dem rotierend angetriebenen Werkzeug und dem Getriebegehäuse gebildet ist. Vorteilhaft ist ein zweites Lüfterrad an der dem Getriebegehäuse zugewandten Seite des Werkzeugs angeordnet. Das zweite Lüfterrad bewirkt eine besonders effektive Förderung des Kühlluftstroms. Das zweite Lüfterrad kann außerdem das Motorgehäuse derart abdichten, dass bei schnell rotierendem Werkzeug nur ein geringer freier Spalt zwischen Motorgehäuse und Werkzeug besteht. Dadurch wird verhindert, dass Verschmutzungen, insbesondere Schnittgut, in das Motorgehäuse eintreten kann. Über das Lüfterrad wird ein ausreichend großer Austrittsquerschnitt für die Kühlluft erreicht. Die zwischen Getriebegehäuse und Werkzeug ausgeblasene Kühlluft bewirkt außerdem, dass Schmutz vom Getriebegehäuse weggeblasen wird.

Vorteilhaft besitzt das Arbeitsgerät einen Schaft, der das Motorgehäuse mit einem Griffgehäuse verbindet. Vorteilhaft wird Kühlluft über den Schaft in das Motorgehäuse angesaugt. Dadurch kann die Kühlluft aus einem dem Werkzeug abgewandten und dadurch nicht mit Schnittgut verunreinigten Bereich angesaugt werden. Das Griffgehäuse besitzt vorteilhaft mindestens eine Lufteintrittsöffnung für Kühlluft. Um einen ausreichend großen Strömungsquerschnitt für den Kühllufteintritt in den Schaft zu erreichen, ist vorgesehen, dass der Schaft an seinem im Griffgehäuse angeordneten Abschnitt an seinem Außenumfang Schaftöffnungen aufweist, über die Kühlluft aus dem Griffgehäuse in den Schaft übertritt. Dadurch, dass die Kühlluft nicht nur über die Stirnseite des Schafts eintritt, kann an der Stirnseite des Schafts eine Führung für die elektrische Anschlussleitung des Antriebsmotors angeordnet werden. Die Führung kann die Stirnseite des Schafts dabei weitgehend verschließen. Dadurch ergibt sich ein einfacher, robuster Aufbau, und Beschädigungen des Kabels durch den Schaft können auf einfache Weise vermieden werden.

Vorteilhaft ist der Schaft verschiebbar im Griffgehäuse gehalten. Dadurch kann die Länge des Schafts an die Größe des Benutzers angepasst werden. Zur Fixierung des Schafts in mindestens zwei Stellungen gegenüber dem Griffgehäuse ist vorteilhaft eine Verriegelungseinrichtung vorgesehen. Ein einfacher Aufbau ergibt sich, wenn die Verriegelungseinrichtung mit mindestens einer Schaftöffnung zusammenwirkt.

Bei Arbeitsgeräten mit verschiebbarem Schaft wird üblicherweise ein Spiralkabel als elektrische Verbindungsleitung verwendet, um auf einfache Weise einen Längenausgleich bei Verstellung der Länge des Arbeitsgeräts zu ermöglichen. Ein Spiralkabel verkleinert jedoch den freien Querschnitt des Schafts, über den die Kühlluft strömt, merklich. Ein Spiralkabel erhöht außerdem das Gewicht des Arbeitsgeräts erheblich. Um den freien Strömungsquerschnitt nicht wesentlich zu beeinflussen, ist vorgesehen, dass die elektrische Verbindungsleitung in der vollständig zusammengeschobenen Stellung von Schaft und Griffgehäuse an dem in das Griffgehäuse ragenden Ende des Schafts in mindestens einer Schlaufe verläuft. Beim Herausziehen des Schafts aus dem Griffgehäuse kann dadurch auf einfache Weise ein Längenausgleich erreicht werden, ohne dass ein Spiralkabel verwendet werden muss.

Ein Ausführungsbeispiel der Erfindung wird im Folgenden anhand der Zeichnung erläutert. Es zeigen:
- Fig. 1: eine perspektivische Darstellung eines Freischneiders,
- Fig. 2: einen Längsschnitt durch den Freischneider aus Fig. 1,
- Fig. 3: die Einzelheit III aus Fig. 2 in vergrößerter Darstellung,
- Fig. 4: eine schematische Schnittdarstellung durch das Motorgehäuse des Freischneiders und
- Fig. 5: den oberen Bereich des Motorgehäuses in vergrößerter Schnittdarstellung.

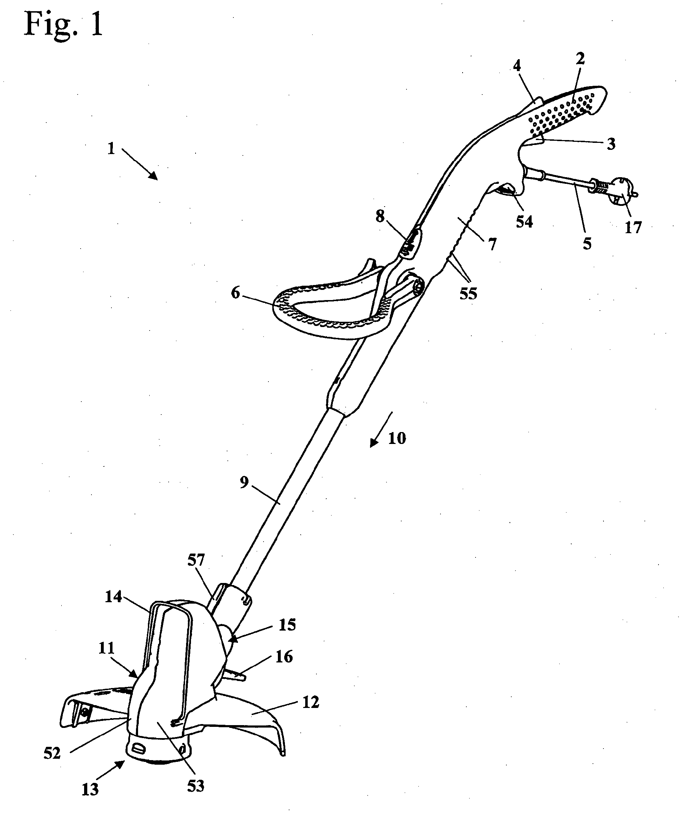

Fig. 1 zeigt als Ausführungsbeispiel für ein Arbeitsgerät ein handgeführtes, handgetragenes Arbeitsgerät, nämlich einen Freischneider 1. Die vorliegende Erfindung kann jedoch auch bei anderen Arbeitsgeräten, insbesondere bei handgeführten Arbeitsgeräten wie beispielsweise Rasenmähern oder dgl. zum Einsatz kommen. Der Freischneider 1 besitzt ein Griffgehäuse 7, an dem ein hinterer Handgriff 2 angeordnet ist. Das Griffgehäuse 7 ist als Kunststoff-Spritzgussteil aus zwei Schalen zusammengesetzt, die auch den hinteren Handgriff 2 bilden. Am hinteren Handgriff 2 sind ein Gashebel 3 sowie eine Gashebelsperre 4 schwenkbar gelagert. Aus dem Griffgehäuse 7 ragt ein elektrisches Anschlusskabel 5, an dessen Ende ein Anschlussstecker 17 vorgesehen ist. Am Griffgehäuse 7 ist eine Durchführung 54 ausgebildet, die Teil einer im Folgenden noch näher beschriebenen Zugentlastung ist. An seiner im Betrieb nach unten weisenden Seite besitzt das Griffgehäuse 7 eine Vielzahl von Lufteintrittsöffnungen 55. Am Griffgehäuse 7 ist am unteren, einem Schaft 9 zugewandten Bereich ein Bügelgriff 6 schwenkbar gelagert. Benachbart zur Lagerstelle des Bügelgriffs 6 ist ein Betätigungsknopf 8 zur Entriegelung der Position des Schafts 9 vorgesehen. In Fig. 1 ist der Freischneider 1 in seiner vollständig zusammengeschobenen Stellung, also in der Position, in der das Griffgehäuse 7 den geringsten Abstand zu einem am anderen Ende des Schafts 9 angeordneten Gehäuse 11 besitzt, gezeigt. Bei gedrücktem Betätigungsknopf 8 kann der Schaft 9 in Richtung des Pfeils 10 aus dem Griffgehäuse 7 gezogen und dadurch die Länge des Freischneiders 1 vergrößert bzw., beim Einschieben des Schafts 9 in das Griffgehäuse 2, verkleinert werden. Dadurch kann die Länge des Freischneiders 1 an die Größe einer Bedienperson angepasst werden.

An dem dem Griffgehäuse 7 abgewandten Ende ist am Schaft 9 ein Haltestutzen 57 fixiert, an dem das Gehäuse 11 über ein Schwenkgelenk 15 gelagert ist. Das Schwenkgelenk 15 kann über einen Betätigungshebel 16 freigegeben werden. Dadurch kann die Drehlage des Gehäuses 11 am Schaft 9 geändert werden.

Wie Fig. 1 zeigt, besteht das Gehäuse 11 aus zwei Schalen 52 und 53, die im Ausführungsbeispiel als Kunststoff-Spritzgussteile ausgebildet sind. Am Gehäuse 11 ist ein schwenkbarer Schutzbügel 14 gelagert, der aus der in Fig. 1 gezeigten Stellung nach vorne und unten geklappt werden kann, um im Betrieb den als Werkzeug dienenden, in Fig. 1 nicht gezeigten Schneidfaden zu schützen. An der dem Bediener zugewandten Seite ist am Gehäuse 11 ein Schutz 12 angeordnet, der in üblicher Weise den in Fig. 1 nicht gezeigten Schneidfaden abdeckt. Am Gehäuse 11 ist ein Mähkopf 13 drehbar gelagert.

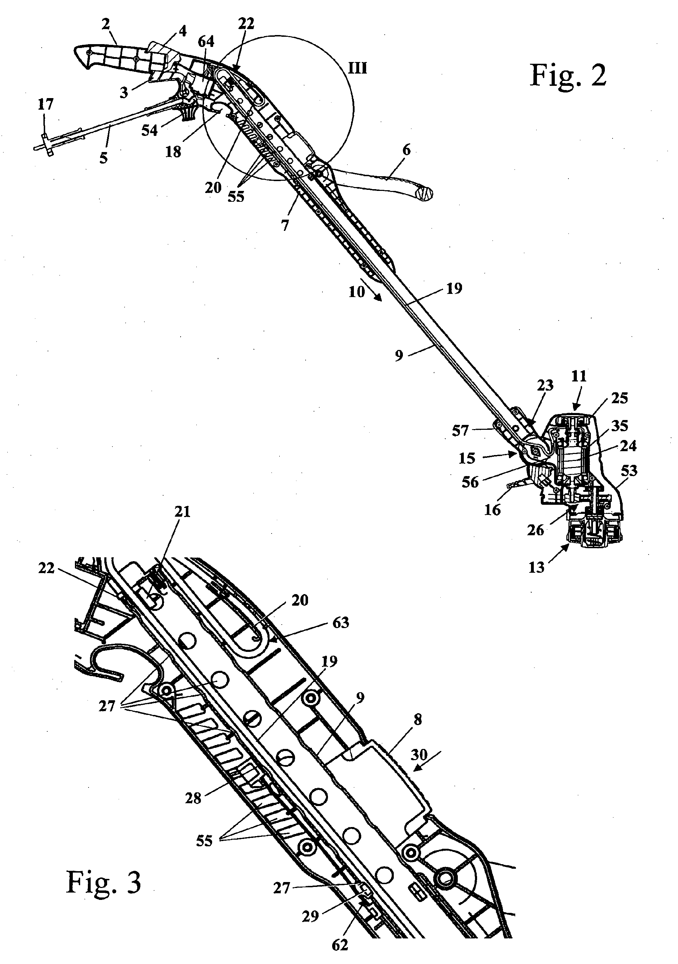

Wie Fig. 2 zeigt, besitzt der Schaft 9 ein erstes, oberes Ende 22, das in das Griffgehäuse 7 ragt, sowie ein zweites, unteres Ende 23, das im Haltestutzen 57 fixiert ist. Wie Fig. 2 auch zeigt, ist der Haltestutzen 57 über eine Einlassöffnung 56 mit dem Innenraum des Gehäuses 11, und zwar mit einem im Gehäuse 11 angeordneten Motorgehäuse 35 verbunden. Im Motorgehäuse 35 ist ein Antriebsmotor 24 angeordnet, an dessen Oberseite ein Lüfterrad 25 zur Förderung eines Kühlluftstroms für den Antriebsmotor 24 angeordnet ist. An der gegenüberliegenden Seite des Antriebsmotors 24 ist ein Getriebe 26 angeordnet. Über das Getriebe 26 treibt der Antriebsmotor 24 den Mähkopf 13 rotierend an.

Wie Fig. 2 auch zeigt, ist im Griffgehäuse 7 eine Steuereinrichtung 64 angeordnet, die das Anschlusskabel 5 mit einer durch den Schaft 9 geführten elektrischen Verbindungsleitung 19 verbindet. Die Steuereinrichtung 64 kann ein einfacher elektrischer Schalter sein, auf den der Gashebel 3 wirkt. Die Steuereinrichtung 64 kann jedoch auch eine Mikroprozessor-basierte Steuerung oder eine andere Art von Steuerung sein, die die Zufuhr elektrischer Energie zum Antriebsmotor 24 und damit die Drehzahl des Antriebsmotors 24 steuert.

Das Anschlusskabel 5 wird über den Anschlussstecker 17 im Betrieb mit einem elektrischen Kabel verbunden. Um zu vermeiden, dass bei Zug am elektrischen Kabel die elektrische Verbindung des elektrischen Kabels zum Anschlussstecker 17 gelöst wird, ist eine Zugentlastung vorgesehen, die von der Durchführung 54 und einer am Griffgehäuse 7 gebildeten Aufnahme 18 gebildet wird. Das elektrische Anschlusskabel 5 wird als Schlaufe durch die Durchführung 54 gesteckt und an der Aufnahme 18 eingehängt, so dass Zugkräfte am elektrischen Kabel im Wesentlichen von der Aufnahme 18 aufgenommen werden und nicht auf die Steckverbindung des elektrischen Kabels zum Anschlussstecker 17 wirken.

Wie die Fig. 2 und 3 zeigen, sind die Lufteintrittsöffnungen 55 in vollständig zusammengeschobener Stellung von Schaft 9 und Griffgehäuse 2 benachbart zum Außenumfang des Schafts 9 angeordnet. Der Schaft 9 besitzt an seinem Außenumfang Schaftöffnungen 27, die im Ausführungsbeispiel als kreisförmige Öffnungen ausgebildet sind. Es sind vier in Längsrichtung verlaufende Reihen von Schaftöffnungen 27 vorgesehen, die in gleichmäßigem Abstand am Umfang des Schafts 9 verteilt sind. Über die Schaftöffnungen 27 gelangt Luft, die über die Lufteintrittsöffnungen 55 ins Innere des Griffgehäuses 7 angesaugt wurde, in den Schaft 9. Die Schaftöffnungen 27 erstrecken sich ausschließlich über den Bereich des Schafts 9, der in jeder vorgesehenen Stellung des Schafts 9 vollständig im Griffgehäuse 7 angeordnet ist, so dass die Schaftöffnungen 27 in keiner Stellung des Schafts 9 außerhalb des Griffgehäuses 2 angeordnet sind und über die Schaftöffnungen 27 kaum Verschmutzungen ins Innere des Schafts 9 gelangen können.

Wie Fig. 3 zeigt, ist am ersten Ende 22 des Schafts 9 eine Führung 21 angeordnet, durch die die Verbindungsleitung 19 in den Schaft 9 geführt ist. Da die Kühlluft nicht nur über die Stirnseite des Schafts 9, sondern überwiegend über die am Umfang verteilten Schaftöffnungen 27 angesaugt wird, kann die Führung 21 die Stirnseite des Schafts 9 am ersten Ende 22 weitgehend oder vollständig verschließen. Die Verbindungsleitung 19 ist in der in den in Fig. 2 und 3 gezeigten Stellung des Schafts 9 benachbart zum ersten Ende 22 des Schafts 9 an der Außenseite des Schafts 9 in einer Schlaufe 63 geführt. Die Verbindungsleitung 19 ist von der Steuereinrichtung 64 kommend zunächst in einen Bereich neben dem Schaft 9, also am ersten Ende 22 des Schafts vorbei, geführt. Am Griffgehäuse 7 ist ein Halter 20 angeordnet, der die Verbindungsleitung 19 in dem Bereich neben dem Schaft 9 hält. Die Verbindungsleitung 19 verläuft vom Halter 20 zurück zum ersten Ende 22 und wird dort durch die Führung 21 ins Innere des Schafts 9 geführt. Wird der Schaft 9 aus dem Griffgehäuse 7 in Richtung des Pfeils 10 (Fig. 2) gezogen, so bewegt sich die Führung 21 relativ zum Halter 20, bis die Verbindungsleitung 19 in der vollständig ausgezogenen Stellung des Schafts 9 weitgehend gerade verläuft. Dadurch, dass die Verbindungsleitung 19 in einer Schlaufe 63 geführt ist, so dass sich ein etwa S-förmiger Verlauf der Verbindungsleitung 19 ergibt, kann auf einfache Weise ein Längenausgleich für die Verbindungsleitung 19 geschaffen werden.

Wie Fig. 3 auch zeigt, kann der Betätigungsknopf 8 in einer Betätigungsrichtung 30 in das Griffgehäuse 7 gedrückt werden. Der Betätigungsknopf 8 ist einteilig mit einer an der dem Betätigungsknopf gegenüberliegenden Seite des Schafts 9 angeordneten Führung 28 sowie mit einem ebenfalls gegenüberliegend zum Betätigungsknopf angeordneten Verriegelungszapfen 29 ausgebildet. Der Verriegelungszapfen 29 ragt in unbetätigter Stellung des Betätigungsknopfes 8 in eine Schaftöffnung 27 und verriegelt dadurch den Schaft 9 in seiner Position. Der Verriegelungszapfen 29 bildet damit eine Verriegelungseinrichtung 62 für den Schaft 9. Die in Längsrichtung des Schafts 9 gebildeten Abstände zwischen den Schaftöffnungen 27 legen fest, in welchen Schritten die Länge des Freischneiders 1 verändert werden kann.

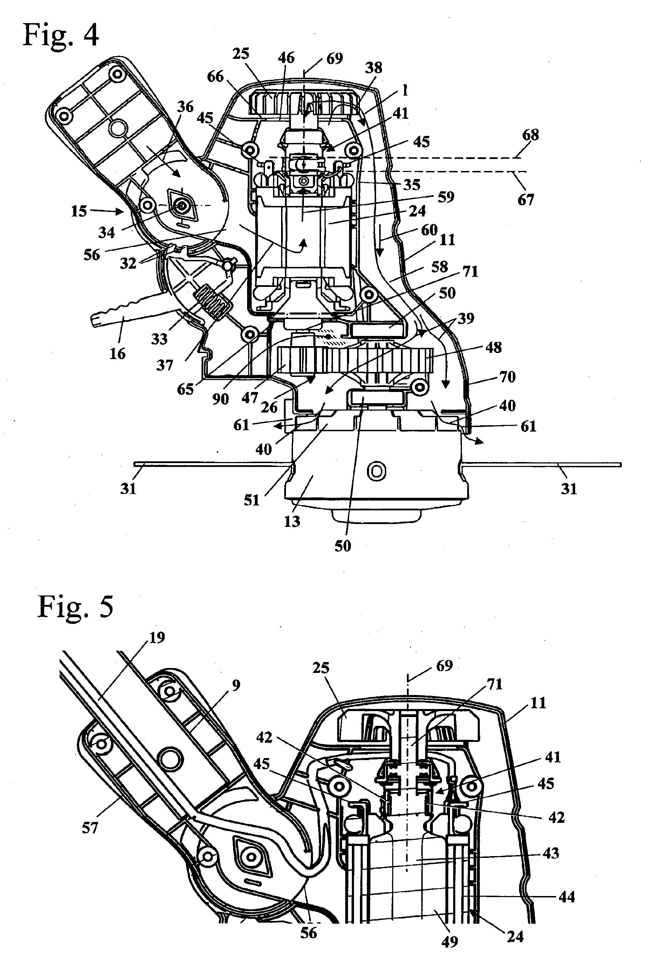

Wie Fig. 4 zeigt, besitzt der Antriebsmotor 24 eine Antriebswelle 71, die an einer ersten Stirnseite 65 des Motorgehäuses 35 und an einer zweiten, gegenüberliegenden Stirnseite 66 aus dem Motorgehäuse 35 ragt. An der Stirnseite 66 ist die Übertrittsöffnung 46 angeordnet. An der Stirnseite 65 ist das Motorgehäuse 35 geschlossen, insbesondere im Wesentlichen flüssigkeitsdicht und luftdicht, ausgebildet. Die erste Stirnseite 65 ist in der gezeigten üblichen Betriebslage des Freischneiders 1 unterhalb der zweiten Stirnseite 66 angeordnet. Die Stirnseiten 65 und 66 sind dabei die etwa senkrecht zu einer Drehachse 69 der Antriebswelle 71 des Antriebsmotors 24 verlaufenden Seiten des Motorgehäuses 35.

In Fig. 4 ist die Kühlluftführung durch das Gehäuse 11 im Einzelnen gezeigt. Die Kühlluft strömt durch das zweite Ende 23 des in Fig. 4 nicht gezeigten Schafts 9 (Fig. 2) in den Haltestutzen 57 und über das Schwenkgelenk 15 durch die Einlassöffnung 56 ins Gehäuse 11 ein. Die Luft strömt dabei in einer Strömungsrichtung 36 im Bereich des Schwenkgelenks 15 aus dem Schaft 9 (Fig. 2) in das Schwenkgelenk 15 ein. Unmittelbar nach dem Eintritt ins Gehäuse 11 gelangt die Kühlluft in das Motorgehäuse 35, wo sie in Richtung des Pfeils 37 umgelenkt wird, und zwar bei der in Fig. 4 gezeigten üblichen Arbeitshaltung des Freischneiders 1 nach oben. Am Antriebsmotor 24 strömt die Kühlluft in einer ersten Strömungsrichtung 59 vorbei. Die erste Strömungsrichtung 59 liegt etwa parallel zur Drehachse 69 der Antriebswelle 71 des Antriebsmotors 24. Die Kühlluft verlässt das Motorgehäuse 35 benachbart zum Antriebsmotor 24 an einer Übertrittsöffnung 46, wo die Kühlluft in einen Verbindungskanal 58 übertritt. Der Kühlluftstrom strömt mindestens teilweise, insbesondere weitgehend vollständig über die Übertrittsöffnung 46 in den Verbindungskanal 58. Der Verbindungskanal 58 verbindet das Motorgehäuse 35 mit einem Getriebegehäuse 70, in dem das Getriebe 26 angeordnet ist. Auch eine andere Strömungsverbindung zwischen Motorgehäuse 35 und Getriebegehäuse 70 kann vorgesehen sein. Im Verbindungskanal 58 ist unmittelbar benachbart zur Übertrittsöffnung 46 und zur Stirnseite 66 des Motorgehäuses 35 das Lüfterrad 25 angeordnet. Am Lüfterrad 25 wird die Kühlluft in Richtung des Pfeils 38 umgelenkt und strömt an der Außenseite des Motorgehäuses 35 entlang in einer zweiten Strömungsrichtung 60, die der Strömungsrichtung 59 im Motorgehäuse 35 entgegengerichtet ist.

Wie Fig. 4 zeigt, besitzt der Verbindungskanal 58 von der Übertrittsöffnung 46 bis zum Getriebegehäuse 70 eine mittlere Länge 1, die mindestens etwa 5 cm beträgt. Vorteilhaft beträgt die mittlere Länge mindestens etwa 10 cm. Die mittlere Länge 1 beträgt vorteilhaft weniger als etwa 25 cm. Als besonderes vorteilhaft hat sich die im Ausführungsbeispiel vorgesehene mittlere Länge 1 von etwa 12 cm herausgestellt. Die mittlere Länge 1 ist bis zum Eintritt ins Getriebegehäuse 70, also bis zu der Stelle, an der sich der Strömungsquerschnitt des Verbindungskanals 58 sprunghaft vergrößert und der Verbindungskanal 58 in den Innenraum des Getriebegehäuses 70 eintritt, gemessen. Die mittlere Länge 1 ist die Verbindungslinie der Mittelpunkte aller senkrecht zur Strömungsrichtung ausgerichteten Strömungsquerschnitte des Verbindungskanals 58.

An der dem Lüfterrad 25 gegenüberliegenden Seite des Antriebsmotors 24 ist ein Antriebsritzel 47 angeordnet, das vom Antriebsmotor 24 angetrieben ist und vorteilhaft drehfest mit der Antriebswelle 71 des Antriebsmotors 24 verbunden ist. Das Antriebsritzel 47 ist das Eingangszahnrad für das Getriebe 26. Das Getriebegehäuse 70 ist benachbart zur Stirnseite 65 des Motorgehäuses 35 angeordnet. Die an der Stirnseite 65 angeordnete Wand des Motorgehäuses 35 begrenzt gleichzeitig das Getriebegehäuse 70 und trennt den Innenraum des Motorgehäuses 35 vom Innenraum des Getriebegehäuses 70. Das Antriebsritzel 47 kämmt mit einem Abtriebsrad 48, das ebenfalls Teil des Getriebes 26 ist. Das Antriebsritzel 47 und das Abtriebsrad 48 besitzen Zähne aus Kunststoff. Vorteilhaft sind Antriebsritzel 47 und Abtriebsrad 48 vollständig aus Kunststoff ausgebildet. Das Abtriebsrad 48 ist mit Lagern 50, die vorteilhaft als Wälzlager ausgebildet sind, im Gehäuse 11 gelagert. Wie Fig. 4 zeigt, strömt die Kühlluft in Richtung von Pfeilen 39 am Getriebe 26 vorbei. Im Ausführungsbeispiel strömt die Kühlluft im Wesentlichen am Abtriebsrad 48 vorbei. Das Abtriebsrad 48 ist drehfest mit dem Mähkopf 13 verbunden und treibt diesen rotierend an. An der dem Gehäuse 11 zugewandten Seite des Mähkopfs 13 ist am Mähkopf 13 ein zweites Lüfterrad 51 angeordnet, das im Ausführungsbeispiel einteilig mit dem Mähkopf 13 ausgebildet ist. Das Lüfterrad 51 ist an der Auslassöffnung 61 aus dem Gehäuse 11 angeordnet. Die Kühlluft strömt entlang der Pfeile 40 durch die Auslassöffnung 61 aus dem Gehäuse 11 aus. Wie Fig. 4 auch zeigt, trägt der Mähkopf 13 zwei nach außen ragende Schneidfäden 31.

Am Schwenkgelenk 15 ist das Gehäuse 11 um eine Schwenkachse 34 gegenüber dem Haltestutzen 57 und damit auch gegenüber dem Schaft 9 schwenkbar. Zum Lösen des Schwenkgelenks dient der Betätigungshebel 16, der von einer Feder 33 in Richtung auf seine Verriegelungsstellung, in der das Schwenkgelenk 15 fixiert ist, gefedert gelagert ist. Der Betätigungshebel 16 wirkt auf Zapfen 32, die mit nicht gezeigten Vertiefungen am Haltestutzen 57 zusammenwirken und so das Schwenkgelenk 15 in seiner Stellung fixieren. Im Ausführungsbeispiel sind zwei Zapfen 32 vorgesehen, die einteilig mit dem Betätigungshebel 16 ausgebildet sind.

Der Antriebsmotor 24 ist ein Elektromotor, der einen Kommutator 41 besitzt. Der Kommutator 41 besitzt die in Fig. 5 gezeigten Bürsten 42, die als Kohlebürsten ausgebildet sind und vorteilhaft im Wesentlichen aus Graphit bestehen. Im Betrieb wird an den Bürsten 42 Kohleabrieb erzeugt. Wie Fig. 5 schematisch zeigt, besitzt der Antriebsmotor 24 Spulen 49. Im Ausführungsbeispiel sind die Spulen 49 drehfest mit der Antriebswelle 71 verbunden und bilden Teil eines Rotors 43. Der Kühlluftstrom strömt, wie Fig. 4 zeigt, nach dem Eintritt ins Motorgehäuse 35 zunächst an den Spulen 49 und danach am Kommutator 41 vorbei. Der Kommutator 41 ist demnach stromab der Spulen 49 im Kühlluftstrom angeordnet. Der Kühlluftstrom strömt durch die Übertrittsöffnung 46 aus dem Motorgehäuse 35 aus und fördert den an den Bürsten 42 erzeugten Kohleabrieb dann über das Lüfterrad 25 zum Getriebe 26. Dort dient der Kohleabrieb zur Schmierung von Antriebsritzel 47 und Abtriebsrad 48 des Getriebes 26.

Um eine ausreichende Schmierung des Getriebes 26 im ersten Betrieb unmittelbar nach der Herstellung des Freischneiders 1 zu gewährleisten, kann es zweckmäßig sein, eine Fettmenge 90 als Startschmierung vorzusehen, z. B. eine Initialfüllung des Getriebes 26 mit einer vorgegebenen Fettmenge 90 vorzusehen. Das im Getriebe 26 befindliche Fett bewirkt ferner eine Bindung des Kohleabriebs bzw. Graphitabriebs, wodurch der Rückhalt des Kohleabriebs bzw. Graphitabriebs im Getriebe 26 verbessert ist. Die initiale Fettfüllung 90 gewährleistet somit nicht nur eine Erstschmierung des Getriebes 26, sondern bindet den im Luftstrom mitgeführten Kohleabrieb bzw. Graphitabrieb, so dass auch auf Dauer eine verbesserte Schmierung des Getriebes 26 erzielt ist.

Vorteilhaft ist die Übertrittsöffnung 46 in möglichst großem Abstand zur Stirnseite 65 angeordnet. Der Antriebsmotor 24 besitzt eine erste gedachte Ebene 67, die an der dem Getriebe 26 zugewandten Seite des Kommutators 41 angeordnet ist und senkrecht zur Drehachse 69 verläuft, und eine zweite gedachte Ebene, die an der dem Getriebe 26 abgewandten Seite des Kommutators 41 senkrecht zur Drehachse 69 verläuft. Die Übertrittsöffnung 46 ist vorteilhaft auf der dem Getriebe 26 abgewandten Seite der ersten gedachten Ebene 67, insbesondere auf der dem Getriebe 26 abgewandten Seite der zweiten gedachten Ebene 68 angeordnet. Dadurch strömt der Kühlluftstrom mindestens durch einen Abschnitt des Kommutators 41, insbesondere durch den gesamten Kommutator 41. Vorteilhaft strömt der Kühlluftstrom zuerst an den Spulen 49 und anschließend am Kommutator 41 vorbei. Der von den Spulen 49 zum Kommutator 41 gerichtete Kühlluftstrom verhindert, dass Kohleabrieb zu den Spulen 49 gelangen kann. Es kann jedoch auch vorteilhaft sein, den Antriebsmotor gegenüber der gezeigten Einbaulage um 180° gedreht anzuordnen, derart, dass der Kommutator 41 an der dem Getriebe 26 zugewandten Seite der Spulen 49 angeordnet ist. Insbesondere bei dieser Einbaulage kann es vorteilhaft sein, dass der Kühlluftstrom zuerst am Kommutator 41 und dann an den Spulen 49 vorbeiströmt, so dass das Motorgehäuse 35 an der Stirnseite 65 und den daran anschließenden Bereichen geschlossen ausgebildet werden kann.

Wie Fig. 5 zeigt, besitzt der Antriebsmotor 24 Anschlussklemmen 45, an denen die Verbindungsleitung 19 angeschlossen ist. Der innenliegende Rotor 43 des Antriebsmotors 24 ist in einem Stator 44 gelagert. Der Rotor 43 dreht sich im Betrieb gegenüber den Bürsten 42 und erzeugt dadurch den Kohleabrieb.

## Patentansprüche

1. Arbeitsgerät mit einem Werkzeug, das von einem Antriebsmotor (24) über ein Getriebe (26) rotierend angetrieben wird, wobei der Antriebsmotor (24) ein Elektromotor ist, der mindestens eine Spule (49) und mindestens einen Kommutator (41) mit Bürsten (42) besitzt, wobei der Antriebsmotor (24) in einem Motorgehäuse (35) angeordnet ist und ein Lüfterrad (25) antreibt, das einen Kühlluftstrom für den Antriebsmotor (24) fördert, und wobei das Getriebe (26) in einem Getriebegehäuse (70) angeordnet ist,
**dadurch gekennzeichnet, dass** der Kühlluftstrom im Betrieb sowohl an der Spule (49) als auch am Kommutator (41) vorbeiströmt und das Motorgehäuse (35) durch eine im Strömungsweg des Kühlluftstroms stromab des Kommutators (41) angeordnete Übertrittsöffnung (46) verlässt, wobei das Motorgehäuse (35) an der dem Getriebegehäuse (70) zugewandten Stirnseite (65) zum Getriebegehäuse (70) geschlossen ausgebildet ist und wobei das Motorgehäuse (35) mit dem Getriebegehäuse (70) über eine Strömungsverbindung verbunden ist, wobei der Kühlluftstrom mindestens teilweise durch die Strömungsverbindung ins Getriebegehäuse (70) strömt, und wobei das Getriebe (26) im Kühlluftstrom durch das Getriebegehäuse (70) angeordnet ist.

2. Arbeitsgerät nach Anspruch 1,
**dadurch gekennzeichnet, dass** der Kühlluftstrom Kohleabrieb der Bürsten (42) des Kommutators (41) zum Getriebe (26) transportiert.

3. Arbeitsgerät nach Anspruch 1 oder 2,
**dadurch gekennzeichnet, dass** der Kühlluftstrom im Betrieb zuerst an der Spule (49) und anschließend am Kommutator (41) vorbeiströmt.

4. Arbeitsgerät nach Anspruch 3,
**dadurch gekennzeichnet, dass** der Kühlluftstrom von der Spule (49) zum Kommutator (41) in einer ersten Strömungsrichtung (59) strömt und dass der Kühlluftstrom in der Strömungsverbindung in einer zweiten, der ersten Strömungsrichtung (59) entgegen gerichteten Strömungsrichtung (60) strömt.

5. Arbeitsgerät nach einem der Ansprüche 1 bis 4,
**dadurch gekennzeichnet, dass** der Antriebsmotor (24) eine erste gedachte Ebene (67) besitzt, die an der dem Getriebegehäuse(70) zugewandten Seite des Kommutators (42) senkrecht zur Drehachse (69) des Antriebsmotors (24) verläuft, wobei die Übertrittsöffnung (46) auf der dem Getriebegehäuse (70) abgewandten Seite der ersten gedachten Ebene (67) angeordnet ist.

6. Arbeitsgerät nach einem der Ansprüche 1 bis 5,
**dadurch gekennzeichnet, dass** der Antriebsmotor (24) eine zweite gedachte Ebene (68) besitzt, die an der dem Getriebegehäuse (70) abgewandten Seite des Kommutators (42) senkrecht zur Drehachse (69) des Antriebsmotors (24) verläuft, wobei die Übertrittsöffnung (46) auf der dem Getriebegehäuse (70) abgewandten Seite der zweiten gedachten Ebene (68) angeordnet ist.

7. Arbeitsgerät nach einem der Ansprüche 1 bis 6,
**dadurch gekennzeichnet, dass** die Strömungsverbindung des Motorgehäuses (35) mit dem Getriebegehäuse (70) ein Verbindungskanal (58) ist.

8. Arbeitsgerät nach Anspruch 7,
**dadurch gekennzeichnet, dass** der Verbindungskanal (58) eine mittlere Länge (1) besitzt, die mindestens etwa 5 cm beträgt.

9. Arbeitsgerät nach einem der Ansprüche 1 bis 8,
**dadurch gekennzeichnet, dass** das Getriebe (26) an der dem Kommutator (41) abgewandten Seite der Spule (49) angeordnet ist.

10. Arbeitsgerät nach einem der Ansprüche 1 bis 9,
**dadurch gekennzeichnet, dass** das Getriebe (26) mindestens zwei miteinander in Eingriff stehende Zahnräder besitzt, deren Zähne aus Kunststoff bestehen.

11. Arbeitsgerät nach einem der Ansprüche 1 bis 10,
**dadurch gekennzeichnet, dass** das Lüfterrad (25) und das Getriebe (26) an gegenüberliegenden Seiten des Antriebsmotors (24) angeordnet sind.

12. Arbeitsgerät nach einem der Ansprüche 1 bis 11,
**dadurch gekennzeichnet, dass** das Lüfterrad (25) benachbart zu der Übertrittsöffnung (46) angeordnet ist.

13. Arbeitsgerät nach einem der Ansprüche 7 bis 12,
**dadurch gekennzeichnet, dass** das Lüfterrad (25) mindestens teilweise in dem Verbindungskanal (58) angeordnet ist.

14. Arbeitsgerät nach einem der Ansprüche 1 bis 13,
**dadurch gekennzeichnet, dass** das Arbeitsgerät ein Gehäuse (11) besitzt, das aus mindestens zwei Schalen (52, 53) gebildet ist, wobei das Motorgehäuse (35), das Getriebegehäuse (70) und die Strömungsverbindung von den Schalen (52, 53) gebildet sind.

15. Arbeitsgerät nach einem der Ansprüche 1 bis 14,
**dadurch gekennzeichnet, dass** der Kühlluftstrom durch mindestens eine Einlassöffnung (56) in das Motorgehäuse (35) eintritt und das Getriebegehäuse (70) durch mindestens eine Auslassöffnung (61) verlässt, wobei die Auslassöffnung (61) zwischen dem rotierend angetriebenen Werkzeug und dem Getriebegehäuse (70) gebildet ist.

16. Arbeitsgerät nach Anspruch 15,
**dadurch gekennzeichnet, dass** ein zweites Lüfterrad (51) an der dem Getriebegehäuse (70) zugewandten Seite des Werkzeugs angeordnet ist.

17. Arbeitsgerät nach einem der Ansprüche 1 bis 16,
**dadurch gekennzeichnet, dass** das Arbeitsgerät einen Schaft (9) besitzt, der das Motorgehäuse (35) mit einem Griffgehäuse (7) verbindet.

18. Arbeitsgerät nach Anspruch 17,
**dadurch gekennzeichnet, dass** über den Schaft (9) Kühlluft in das Motorgehäuse (35) angesaugt wird, wobei das Griffgehäuse (7) mindestens eine Lufteintrittsöffnung (55) für Kühlluft besitzt, und wobei der Schaft (9) an seinem im Griffgehäuse (7) angeordneten Abschnitt an seinem Außenumfang Schaftöffnungen (27) aufweist, über die Kühlluft aus dem Griffgehäuse (7) in den Schaft (9) übertritt.

19. Arbeitsgerät nach Anspruch 17 oder 18,
**dadurch gekennzeichnet, dass** der Schaft (9) verschiebbar in dem Griffgehäuse (7) gehalten ist und dass das Arbeitsgerät eine Verriegelungseinrichtung (62) besitzt, mit der der Schaft (9) in mindestens zwei Stellungen gegenüber dem Griffgehäuse (7) fixiert werden kann, wobei die Verriegelungseinrichtung (62) mit mindestens einer Schaftöffnung (27) zusammenwirkt.

## Claims

1. Working implement with a tool which is driven to rotate by a drive motor (24) via a transmission (26), wherein the drive motor (24) is an electric motor having at least one coil (49) and at least one commutator (41) with brushes (42), wherein the drive motor (24) is located in a motor frame (35) and drives a fan impeller (25) delivering a cooling air flow for the drive motor (24), and wherein the transmission (26) is located in a transmission casing (70),
**characterised in that** in operation the cooling air flow passes both the coil (49) and the commutator (41) and leaves the motor frame (35) via a transfer opening (46) located in the flow path of the cooling air flow downstream of the commutator (41), wherein the motor frame (35) is designed to be closed towards the transmission casing (70) at the end face (65) facing the transmission casing (70), and wherein the motor frame (35) is connected to the transmission casing (70) via a flow connection, wherein a part of the cooling air flow flows through the flow connection into the transmission casing (70), and wherein the transmission (26) is located in the cooling air flow through the transmission casing (70).

2. Working implement according to claim 1,
**characterised in that** the cooling air flow conveys carbon debris of the brushes (42) of the commutator (41) to the transmission (26).

3. Working implement according to claim 1 or 2,
**characterised in that** in operation the cooling air flow first passes the coil (49) and then the commutator (41).

4. Working implement according to claim 3,
**characterised in that** the cooling air flow flows from the coil (49) to the commutator (41) in a first flow direction (59), and **in that** the cooling air flow flows in the flow connection in a second flow direction (60), which is opposed to the first flow direction (59).

5. Working implement according to any of claims 1 to 4,
**characterised in that** the drive motor (24) has a first imaginary plane (67), which extends perpendicular to the axis of rotation (69) of the drive motor (24) on the side of the commutator (42) which faces the transmission casing (70), the transfer opening (46) being located on the side of the first imaginary plane (67) which is remote from the transmission casing (70).

6. Working implement according to any of claims 1 to 5,
**characterised in that** the drive motor (24) has a second imaginary plane (68), which extends perpendicular to the axis of rotation (69) of the drive motor (24) on the side of the commutator (42) which is remote from the transmission casing (70), the transfer opening (46) being located on the side of the second imaginary plane (68) which is remote from the transmission casing (70).

7. Working implement according to any of claims 1 to 6,
**characterised in that** the flow connection between the motor frame (35) and the transmission casing (70) is a connecting passage (58).

8. Working implement according to claim 7,
**characterised in that** the connecting passage (58) has an average length of at least approximately 5 cm.

9. Working implement according to any of claims 1 to 8,
**characterised in that** the transmission (26) is located on the side of the coil (49) which is remote from the commutator (41).

10. Working implement according to any of claims 1 to 9,
**characterised in that** the transmission (26) comprises at least two meshing gears, the teeth of which are made of a plastic material.

11. Working implement according to any of claims 1 to 10,
**characterised in that** the fan impeller (25) and the transmission (26) are located on opposite sides of the drive motor (24).

12. Working implement according to any of claims 1 to 11,
**characterised in that** the fan impeller (25) is located adjacent to the transfer opening (46).

13. Working implement according to any of claims 7 to 12,
**characterised in that** the fan impeller (25) is at least partially located in the connecting passage (58).

14. Working implement according to any of claims 1 to 13,
**characterised in that** the working implement has a housing (11) consisting of at least two shells (52, 53), the motor frame (35), the transmission casing (70) and the flow connection being formed by the shells (52, 53).

15. Working implement according to any of claims 1 to 14,
**characterised in that** the cooling air flow enters the motor frame (35) through at least one inlet opening (56) and leaves the transmission casing (70) through at least one outlet opening (61), the outlet opening (61) being formed between the rotating tool and the transmission casing (70).

16. Working implement according to claim 15,
**characterised in that** a second fan impeller (51) is located on the side of the tool which faces the transmission casing (70).

17. Working implement according to any of claims 1 to 16,
**characterised in that** the working implement has a shank (9) which connects the motor frame (35) to a handle housing (7).

18. Working implement according to claim 17,
**characterised in that** cooling air is drawn into the motor frame (35) via the shank (9), wherein the handle housing (7) has at least one air inlet opening (55) for cooling air, and wherein the shank (9) has, in the section located in the handle housing (7), on its outer circumference shank openings (27), via which cooling air flows from the handle housing (7) into the shank (9).

19. Working implement according to claim 17 or 18,
**characterised in that** the shank (9) is displaceably held in the handle housing (7), and **in that** the working implement comprises a locking device (62), by means of which the shank (9) can be locked in at least two positions relative to the handle housing (7), the locking device (62) acting together with at least one shank opening (27).

## Revendications

1. Appareil de travail avec un outil qui est entraîné en rotation par un moteur d'entraînement (24) par l'intermédiaire d'une transmission (26), étant précisé que le moteur d'entraînement (24) est un moteur électrique qui comporte au moins une bobine (49) et au moins un commutateur (41) avec des balais (42), que le moteur d'entraînement (24) est disposé dans un boîtier de moteur (35) et entraîne une roue de ventilateur (25) qui amène un courant d'air de refroidissement pour le moteur d'entraînement (24),
**caractérisé en ce que** le courant d'air de refroidissement, en fonctionnement, passe aussi bien devant la bobine (49) que devant le commutateur (41), et sort du boîtier de moteur (35) par une ouverture de passage (46) disposée en aval du commutateur (41), sur la trajectoire du courant d'air de refroidissement, étant précisé que le boîtier de moteur (35) a une forme fermée par rapport au boîtier de transmission (70), sur le côté frontal (65) tourné vers ledit boîtier de transmission (70), et que le boîtier de moteur (35) est relié au boîtier de transmission (70) par une liaison d'écoulement, étant précisé que le courant d'air de refroidissement entre dans le boîtier de transmission (70) en empruntant au moins en partie la liaison d'écoulement, et que la transmission (26) est disposée dans le courant d'air de refroidissement qui passe par le boîtier de transmission (70).

2. Appareil de travail selon la revendication 1,
**caractérisé en ce que** le courant d'air de refroidissement transporte jusqu'à la transmission (26) le charbon arraché par usure des balais (42) du commutateur (41).

3. Appareil de travail selon la revendication 1 ou 2,
**caractérisé en ce que** le courant d'air de refroidissement, en fonctionnement, passe tout d'abord devant la bobine (49), et ensuite devant le commutateur (41).

4. Appareil de travail selon la revendication 3,
**caractérisé en ce que** le courant d'air de refroidissement s'écoule de la bobine (49) jusqu'au commutateur (41) dans un premier sens d'écoulement (59), et **en ce que** le courant d'air de refroidissement s'écoule dans la liaison d'écoulement dans un deuxième sens d'écoulement (60), opposé au premier sens d'écoulement (59).

5. Appareil de travail selon l'une des revendications 1 à 4,
**caractérisé en ce que** le moteur d'entraînement (24) comporte un premier plan imaginaire (67) qui est perpendiculaire à l'axe de rotation (69) dudit moteur (24), sur le côté du commutateur (42) tourné vers le boîtier de transmission (70), étant précisé que l'ouverture de passage (46) est disposée sur le côté du premier plan imaginaire (67) opposé au boîtier de transmission (70).

6. Appareil de travail selon l'une des revendications 1 à 5,
**caractérisé en ce que** le moteur d'entraînement comporte un second plan imaginaire (68) qui est perpendiculaire à l'axe de rotation (69) dudit moteur (24), sur le côté du commutateur (42) opposé au boîtier de transmission (70), étant précisé que l'ouverture de passage (46) est disposée sur le côté du second plan imaginaire (68) opposé au boîtier de transmission (70).

7. Appareil de travail selon l'une des revendications 1 à 6,
**caractérisé en ce que** la liaison d'écoulement entre le boîtier de moteur (35) et le boîtier de transmission (70) est un conduit de liaison (58).

8. Appareil de travail selon la revendication 7,
**caractérisé en ce que** le conduit de liaison (58) présente une longueur moyenne (1) qui est d'au moins environ 5 cm.

9. Appareil de travail selon l'une des revendications 1 à 8,
**caractérisé en ce que** la transmission (26) est disposée sur le côté de la bobine (49) opposé au commutateur (41).

10. Appareil de travail selon l'une des revendications 1 à 9,
**caractérisé en ce que** la transmission (26) comporte au moins deux roues dentées en prise, dont les dents sont en matière plastique.

11. Appareil de travail selon l'une des revendications 1 à 10,
**caractérisé en ce que** la roue de ventilateur (25) et la transmission (26) sont disposées sur des côtés opposés du moteur d'entraînement (24).

12. Appareil de travail selon l'une des revendications 1 à 11,
**caractérisé en ce que** la roue de ventilateur (25) est voisine de l'ouverture de passage (46).

13. Appareil de travail selon l'une des revendications 7 à 12,
**caractérisé en ce que** la roue de ventilateur (26) est disposée au moins en partie dans le conduit de liaison (58).

14. Appareil de travail selon l'une des revendications 1 à 13,
**caractérisé en ce que** l'appareil de travail comporte un boîtier (11) qui se compose d'au moins deux coques (52, 53), étant précisé que le boîtier de moteur (35), le boîtier de transmission (70) et la liaison d'écoulement sont formés par les coques (52, 53).

15. Appareil de travail selon l'une des revendications 1 à 14,
**caractérisé en ce que** le courant d'air de refroidissement entre dans le boîtier de moteur (35) par au moins une ouverture d'admission (56) et sort du boîtier de transmission (70) par au moins une ouverture de sortie (61), ladite ouverture de sortie (61) étant formée entre l'outil entraîné en rotation et le boîtier de transmission (70).

16. Appareil de travail selon la revendication 15,
**caractérisé en ce qu'**une seconde roue de ventilateur (51) est disposée sur le côté de l'outil tourné vers le carter de transmission (70).

17. Appareil de travail selon l'une des revendications 1 à 16,
**caractérisé en ce que** l'appareil de travail comporte un manche (9) qui relie le boîtier de moteur (35) à un boîtier de poignée (7).

18. Appareil de travail selon la revendication 17,
**caractérisé en ce que** par l'intermédiaire du manche (9), de l'air de refroidissement est aspiré dans le boîtier de moteur (35), étant précisé que le boîtier de poignée (7) comporte au moins une ouverture d'admission d'air (55) pour l'air de refroidissement, et que le manche (9) comporte sur sa circonférence extérieure, sur sa partie disposée dans le boîtier de poignée (7), des ouvertures de manche (27) par lesquelles l'air de refroidissement sort du boîtier de poignée (7) pour entrer dans le manche (9).

19. Appareil de travail selon la revendication 17 ou 18,
**caractérisé en ce que** le manche (9) est maintenu coulissant dans le boîtier de poignée (7), et **en ce que** l'appareil de travail comporte un dispositif de verrouillage (62) avec lequel le manche (9) peut être fixé dans au moins deux positions par rapport au boîtier de poignée (7), étant précisé que le dispositif de verrouillage (62) coopère avec au moins une ouverture de manche (27).
